# DEMANDE DE BREVET EUROPEEN

(11) **EP 2 146 397 A2**
(43) Date de publication de la demande: **20.01.2010**
(21) Numéro de dépôt: 09305684.4
(22) Date de dépôt: 17.07.2009
(51) Int. Cl.: H01R 11/14, H02G 1/02

(54) **Dispositif de mise à la terre d'un câble électrique aérien**

(30) Priorité: 18.07.2008 FR 0854923
(71) Demandeur: Fameca, 68170 Rixheim (FR)
(72) Inventeur: Scheidt, Frédéric, 68440 Dietwiller (FR); Ayad, Amar, 68110 Illzach (FR)
(74) Mandataire: Rhein, Alain

(57) **Abrégé**

L'invention concerne un dispositif (1) de mise à la terre d'un câble électrique aérien (C) que comporte un réseau électrique de basse ou de moyenne tension, ce dispositif (1) comportant :
- une perche (3) présentant une extrémité distale (30) ainsi qu'une extrémité proximale (31) ;
- un moyen (2) pour réaliser un contact électrique avec le câble (C) à mettre à la terre, ce moyen (2) équipant l'extrémité distale (30) de la perche (3) ;
- un moyen (4) pour la préhension du dispositif (1), ce moyen (4) de préhension équipant l'extrémité proximale (31) de la perche (3) ;
- un moyen (5) pour réaliser une conduction électrique entre le moyen de contact (2) et le moyen de préhension (4).

Ce dispositif (1) est **caractérisé en ce qu**'il comporte, s'étendant à partir de l'extrémité distale (30) de la perche (3) et sur une partie au moins de sa longueur, au moins un moyen (6) pour isoler électriquement et extérieurement cette perche (3).

## Description

La présente invention a trait à un dispositif de mise à la terre d'un câble électrique aérien ainsi qu'à une installation de mise à la terre et en court-circuit d'une pluralité de ces câbles électriques.

Cette invention concerne le domaine de la conception et de la fabrication des dispositifs destinés à être utilisés lors d'une intervention sur un réseau électrique de basse ou de moyenne tension, plus particulièrement lorsqu'il s'agit de mettre à la terre au moins un câble aérien que comporte un tel réseau ou de mettre en court-circuit (ainsi qu'à la terre) une pluralité de ces câbles aériens.

L'on connaît, d'ores et déjà, des dispositifs susceptibles d'être utilisés pour réaliser une telle mise à la terre et une telle mise en court-circuit.

Un tel dispositif est décrit dans le document FR-2.459.566 et adopte la forme d'une perche présentant, d'une part, une extrémité distale pourvue d'un moyen pour réaliser un contact électrique avec un câble aérien du réseau et, d'autre part, une extrémité proximale pourvue d'un moyen pour la préhension de cette perche par un opérateur. C'est, plus particulièrement, au niveau de ce moyen de préhension que cette perche est raccordée à la terre.

Dans ce document il est, encore, décrit une installation pour la mise en court-circuit et à la terre d'une pluralité de câbles électriques que comporte un réseau électrique. Une telle installation comporte, d'une part, autant de dispositifs tels susmentionnés que de câbles électriques à mettre en court-circuit et à la terre, chacun de ces dispositifs étant mis en contact électrique avec un tel câble. D'autre part, cette installation comporte un moyen (usuellement un câble électrique) pour le raccordement électrique de ces dispositifs entre eux ainsi qu'un moyen (là encore et de manière usuelle un câble électrique) pour le raccordement électrique (notamment par l'intermédiaire d'un touret) de l'un de ces dispositifs à un piquet planté dans le sol pour une mise à la terre.

On observera que la perche d'un tel dispositif est, usuellement, réalisée en un matériau métallique, plus particulièrement de l'aluminium, et présente une grande longueur afin de permettre un accrochage d'un tel dispositif sur un câble électrique situé à une hauteur importante par rapport au sol sur lequel se tient un opérateur en charge de la manipulation de ce dispositif.

La longueur et le matériau constitutif d'un tel dispositif rendent, en fait, sa manipulation particulièrement délicate et l'opérateur doit faire preuve de dextérité, de précision et d'une attention toute particulière en raison des risques importants d'électrocution encours et inhérents à une intervention sur un réseau de basse ou de moyenne tension.

De plus, on remarquera que, tel que cela ressort de ce document FR-2.459.566, un tel dispositif est adapté à la mise à la terre et à la mise en court-circuit des câbles électriques d'un réseau lorsque les câbles de ce réseau s'étendent dans un plan sensiblement horizontal, ceci pour peu de prendre les précautions de manipulation appropriées.

Par contre, un tel dispositif n'est aucunement compatible avec une intervention sur un réseau comportant des câbles électriques dont au moins deux se situent dans un plan sensiblement vertical (réseau en drapeau, en triangle ou analogue). En effet, la position respective de ces câbles permet difficilement l'accrochage d'un tel dispositif à un câble déterminé sans encourir le risque de mettre ce dispositif également en contact avec un autre câble se situant en contrebas. Compte tenu du matériau conducteur électrique constituant ledit dispositif, une telle mise en contact se traduirait par l'établissement, entre ces deux câbles, d'un court-circuit involontaire et nullement maîtrisé, ce qui n'est aucunement acceptable dans le cadre d'une intervention sur un réseau de basse ou de moyenne tension.

La présente invention se veut à même de remédier aux inconvénients des dispositifs de l'état de la technique par le biais d'un nouveau dispositif de mise à la terre et d'une nouvelle installation comportant un tel dispositif.

A cet effet, l'invention concerne un dispositif de mise à la terre d'un câble électrique aérien que comporte un réseau électrique de basse ou de moyenne tension comportant au moins deux câbles qui s'étendent dans un même plan sensiblement vertical. Ce dispositif comporte :
- une perche présentant une extrémité distale ainsi qu'une extrémité proximale ;
- un moyen pour réaliser un contact électrique avec le câble à mettre à la terre, ce moyen équipant l'extrémité distale de la perche ;
- un moyen pour la préhension du dispositif, ce moyen de préhension équipant l'extrémité proximale de la perche ;
- un moyen pour réaliser une conduction électrique entre le moyen de contact et le moyen de préhension.

Ce dispositif est caractérisé par le fait qu'il comporte, s'étendant à partir de l'extrémité distale de la perche et sur une partie au moins de la longueur de cette perche, au moins un moyen pour isoler électriquement et extérieurement cette perche, plus particulièrement une partie au moins du moyen de conduction électrique que comporte cette perche.

L'invention concerne, également, l'utilisation d'un tel dispositif pour la mise à la terre d'un câble électrique aérien que comporte un réseau électrique de basse ou de moyenne tension comportant une pluralité de câbles électriques dont au moins deux s'étendent dans un même plan sensiblement vertical.

L'invention a, encore, trait à une installation de mise à la terre et en court-circuit d'une pluralité de câbles électriques que comporte un réseau électrique de basse ou de moyenne tension comportant une pluralité de câbles électriques dont au moins deux s'étendent dans un même plan sensiblement vertical. Cette installation est caractérisée par le fait qu'elle comporte au moins une pluralité de dispositifs, d'une part, présentant les caractéristiques susmentionnées et, d'autre part, raccordés, chacun, à un tel câble électrique. Cette installation comporte, encore, au moins un moyen pour le raccordement électrique, entre eux, de l'ensemble des dispositifs de mise à la terre de l'installation ainsi qu'au moins un moyen pour le raccordement à la terre de l'ensemble des dispositifs de mise à la terre de l'installation.

Finalement, l'invention concerne l'utilisation d'une telle installation de mise à la terre et en court-circuit présentant les caractéristiques susmentionnées pour la mise à la terre et en court-circuit d'au moins deux câbles électriques, d'une part, que comporte un réseau électrique de basse ou de moyenne tension et, d'autre part, qui s'étendent dans un même plan sensiblement vertical.

Les avantages de la présente invention consistent en ce que le dispositif comporte un moyen pour isoler électriquement et extérieurement une partie au moins de la perche constituant, au moins en partie, un tel dispositif. En fait, le moyen d'isolation s'étend à partir de l'extrémité distale de cette perche et sur une partie au moins de la longueur de celle-ci, plus particulièrement au niveau d'une partie de cette perche susceptible d'entrer en contact avec un câble qui se situe en contrebas d'un câble sur lequel est accroché un tel dispositif.

Une autre caractéristique avantageuse consiste en ce que cette perche comporte une pluralité d'éléments télescopiques dont au moins celui équipé du moyen de contact est pourvu d'un moyen d'isolation électrique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée de l'intégralité du dispositif conforme à la présente invention ;
- la figure 2 est une vue schématisée de la partie distale du dispositif illustré figure 1 ;
- la figure 3 est une vue schématisée correspondant à un détail d'un élément télescopique que comporte la perche du dispositif conforme à l'invention, ceci au niveau de l'extrémité distale de cette perche ;
- la figure 4 est une vue schématisée d'une installation pour la mise à la terre et en court-circuit des câbles électriques d'un réseau de basse ou de moyenne tension.

La présente invention concerne le domaine de la fabrication des dispositifs destinés à être utilisés lors d'une intervention sur un réseau électrique de basse tension (usuellement de tension inférieure à 1.000V) ou de moyenne tension (usuellement de tension comprise entre 1.000V et 52.000V), plus particulièrement lorsqu'il s'agit de mettre à la terre au moins un câble aérien C que comporte un tel réseau ou de mettre en court-circuit (ainsi qu' à la terre) une pluralité de ces câbles aériens C.

L'invention concerne, alors, un dispositif 1 conçu pour mettre à la terre un tel câble électrique C.

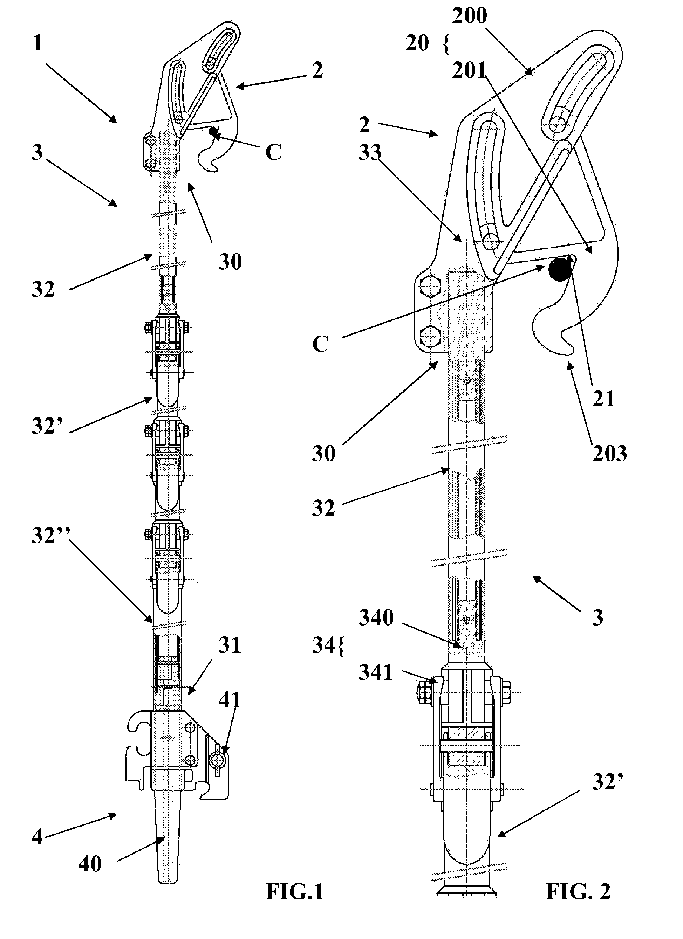

Tel que visible figure 1, un tel dispositif 1 comporte, d'une part, un moyen 2 pour réaliser un contact électrique avec le câble C à mettre à la terre.

Un tel moyen 2 pour réaliser un contact électrique peut adopter la forme d'une pince ou encore (et comme illustré figures 1, 2 et 3), celle d'un crochet 20 pour l'accrochage du dispositif 1 sur le câble C à mettre à la terre.

Ce moyen 2 est réalisé en un matériau conducteur électrique, plus particulièrement en un matériau métallique, de préférence en aluminium.

D'autre part, le dispositif 1 comporte une perche 3 présentant une extrémité distale 30 (équipée du moyen 2 pour réaliser un contact électrique) ainsi qu'une extrémité proximale 31 comme visible figure 1.

A ce propos, on observera qu'une telle perche 3 peut présenter une longueur déterminée et fixe. Une telle perche 3 peut, alors, être réalisée en une ou plusieurs pièces de longueur fixe, notamment aboutées.

Cependant et selon un mode de réalisation préféré de l'invention, une telle perche 3 comporte au moins deux éléments télescopiques (32, 32', 32") susceptibles d'adopter :
- une position repliée dans laquelle chaque élément télescopique 32 est rétracté à l'intérieur d'un autre élément télescopique 32' auquel cet élément 32 est associé, cette position repliée correspondant à une configuration de la perche 3 adoptée pour le transport du dispositif 1 ;
- une position déployée dans laquelle chaque élément télescopique 32 s'étend en dehors de l'élément télescopique 32' auquel il est associé, cette position déployée correspondant à une configuration de la perche 3 adoptée lors d'une mise à la terre d'un câble électrique C ou d'une mise en court-circuit d'une pluralité de ces câbles C.

Dans un pareil cas, l'extrémité distale 30 de la perche 3 est définie au niveau de l'un de ces éléments télescopiques 32 (plus particulièrement constitué par un élément télescopique distal 32) tandis que l'extrémité proximale 31 de cette perche 3 est définie au niveau d'un autre 32" de ces éléments télescopiques (plus particulièrement constitué par un élément télescopique proximal 32'').

Ce dispositif 1 comporte, d'autre part encore, un moyen 4 pour la préhension de ce dispositif 1, ce moyen de préhension 4 équipant l'extrémité proximale 31 de la perche 3.

A ce propos, on observera que ce moyen 4 de préhension peut être conçu pour être manipulé directement par un opérateur. De manière additionnelle et selon un mode de réalisation préféré de l'invention, un tel moyen de préhension 4 comporte un embout 40 pour le raccordement de ce moyen de préhension 4 à un organe de manoeuvre, plus particulièrement à une tulipe de raccordement que comporte un tel organe de manoeuvre.

On observera qu'un tel organe de manouvre peut, avantageusement, être constitué par une perche, plus particulièrement de type isolante.

Selon une autre caractéristique, ce moyen de préhension 4 peut, encore, comporter un moyen 41 pour la réception d'un moyen (100 ; 101) pour le raccordement électrique du dispositif 1, selon le cas, à un autre dispositif 1 (plus particulièrement pour une mise en court-circuit d'une pluralité de câbles électriques C d'un réseau aérien) ou à un piquet de mise à la terre de ce dispositif 1.

Finalement, le dispositif 1 comporte un moyen 5 pour réaliser une conduction électrique entre le moyen de contact 2 et le moyen de préhension 4.

A ce propos, on observera qu'un tel moyen de conduction 5 peut être constitué par le corps (réalisé en un matériau conducteur, notamment métallique, plus particulièrement en aluminium) d'une perche 3 de longueur fixe.

Cependant et selon un mode de réalisation pour lequel une telle perche 3 comporte une pluralité d'éléments télescopiques (32 ; 32' ; 32''), chacun de ces éléments télescopiques (32 ; 32' ; 32'') comportant, alors, une portion du moyen 5 pour réaliser une conduction électrique.

De manière additionnelle, cette perche 3 comporte, encore, des moyens 34 pour réaliser une connexion électrique entre la portion du moyen 5 de conduction que comporte un élément télescopique (32 ; 32') et la portion du moyen 5 de conduction que comporte un autre élément télescopique (32' ; 32''), ceci au moins dans une configuration entièrement déployée de la perche 3.

Ces portions d'éléments télescopiques (32, 32', 32'') sont, alors, en contact électrique au moins dans une configuration entièrement déployée de la perche 3, ceci pour assurer (au moins dans cette configuration déployée) une conduction entre le moyen de contact 2 et le moyen de préhension 4.

Quel que soit le mode de réalisation d'une telle perche 3 (longueur fixe ou pluralité d'éléments télescopiques 32), le moyen 5 de conduction électrique ou la portion de ce moyen 5 de conduction électrique, est, de préférence, constitué, au moins en partie, par un barreau conducteur ou par un tube conducteur 51, notamment métallique, plus particulièrement en aluminium.

Selon l'invention, le dispositif 1 comporte, encore, au moins un moyen 6 pour isoler électriquement et extérieurement cette perche 3, plus particulièrement une partie au moins du moyen 5 de conduction électrique que comporte cette perche 3.

En fait, ce moyen d'isolation 6 s'étend à partir de l'extrémité distale 30 de la perche 3 et sur une partie au moins de la longueur de cette perche 3. A ce propos, on observera que cette longueur correspond au moins à la distance séparant deux câbles électriques (C ; C' ; C'') d'un réseau aérien, plus particulièrement deux câbles (C ; C' ; C'') se situant dans un même plan sensiblement vertical.

Selon un premier mode de réalisation décrit ci-dessus, une telle perche 3 présente une longueur déterminée et fixe et comporte un moyen 6 pour isoler électriquement et extérieurement cette perche 3. Ce moyen d'isolation 6 peut être constitué par un revêtement isolant (notamment sous forme d'un manchon isolant ou analogue) habillant le moyen 5 de conduction que comporte une telle perche 3 et qui peut être constitué par le corps de cette perche 3, plus particulièrement sous forme d'un barreau conducteur ou d'un tube conducteur 51 tel que susmentionné.

Cependant et selon un mode de réalisation préféré, un tel moyen 6 d'isolation peut être constitué par un tube creux (notamment cylindrique) réalisé en un matériau isolant et recevant, intérieurement, un tel moyen 5 de conduction (corps de la perche 3, notamment sous forme d'un barreau conducteur ou d'un tube conducteur).

Selon un mode de réalisation préféré de l'invention décrit ci-dessus, cette perche 3 comporte au moins deux éléments télescopiques (32, 32', 32'').

Dans un pareil cas, l'un au moins des éléments télescopiques (32, 32', 32'') d'une telle perche 3 (de préférence au moins l'élément télescopique distal 32 au niveau duquel est définie l'extrémité distale 30 de la perche 3) comporte un moyen 6 pour isoler électriquement et extérieurement cet élément télescopique (32, 32', 32'') de la perche 3, plus particulièrement un moyen 6 pour isoler électriquement et extérieurement une portion du moyen 5 pour réaliser une conduction électrique que comporte un tel élément télescopique (32, 32, 32''), de préférence que comporte l'élément télescopique distal 32.

A ce propos, on observera que le moyen 6 d'isolation électrique d'un tel élément télescopique (32, 32', 32'') peut être constitué par un revêtement isolant (notamment sous forme d'un manchon isolant ou analogue), habillant la portion de moyen 5 de conduction que comporte un tel élément télescopique (32, 32', 32'').

Cependant et selon un mode de réalisation préféré de l'invention, le moyen 6 pour isoler électriquement une telle portion de moyen 5 de conduction, est constitué par un tube creux 61 (notamment cylindrique) réalisé en un matériau isolant et recevant, intérieurement, cette portion de moyen 5 de conduction.

En particulier, le moyen 6 pour isoler la portion du moyen 5 pour réaliser une conduction électrique que comporte l'élément télescopique distal 32, est constitué, soit par un revêtement isolant, notamment sous forme d'un manchon isolant, habillant cette portion de moyen de conduction 5, soit par un tube 61 creux réalisé en un matériau isolant et recevant, intérieurement, cette portion de moyen de conduction 5.

Selon une autre caractéristique, c'est, plus particulièrement, à l'intérieur d'un tel manchon ou d'un tel tube isolant 61 que s'étend, longitudinalement, selon le cas, le moyen 5 de conduction électrique ou la portion d'un tel moyen 5 de conduction électrique, plus particulièrement constitué par un barreau conducteur ou un tube conducteur 51 tel que susmentionné.

Tel qu'il ressort de ce qui précède, le moyen 6 d'isolation peut être constitué par un tube creux isolant 61. Dans un pareil cas et selon une caractéristique additionnelle de l'invention, un tel tube isolant 61 et le moyen 5 de conduction (barreau conducteur ou tube conducteur 51) sont coaxiaux et espacés l'un de l'autre radialement, plus particulièrement par un matériau isolant, notamment une lame d'air.

Tel que mentionné ci-dessus, la perche 3 comporte des moyens 34 pour réaliser une connexion électrique entre la portion du moyen 5 de conduction que comporte un élément télescopique (32 ; 32') et la portion du moyen 5 de conduction que comporte un autre élément télescopique (32' ; 32''), ceci au moins dans une configuration entièrement déployée de la perche 3.

De plus, selon un mode de réalisation préféré de l'invention, c'est, plus particulièrement, l'élément télescopique distal 32 qui comporte un moyen 6 pour isoler la portion du moyen 5 de conduction électrique que comporte cet élément télescopique distal 32.

Dans un pareil cas, le moyen 34 pour réaliser une connexion électrique entre la portion du moyen 5 de conduction de l'élément télescopique distal 32 et la portion du moyen 5 de conduction d'un autre élément télescopique 32' (à l'intérieur duquel s'escamote l'élément télescopique distal 32) comporte :
- d'une part, un organe conducteur 340 que comporte la portion du moyen 5 de conduction de l'élément télescopique distal 32 au niveau d'une extrémité de cet élément télescopique distal 32 opposée à celle recevant le moyen 2 de contact avec le câble C à mettre à la terre ;
- d'autre part, un moyen 341 pour la réception de manière serrée de cet organe conducteur 340 et que comporte la portion du moyen 5 de conduction de cet autre élément télescopique 32'.

A ce propos et selon une caractéristique additionnelle, l'organe conducteur 340 présente une section externe supérieure à celle du moyen d'isolation 6 que comporte l'élément télescopique distal 32.

Un tel mode de réalisation permet, de manière avantageuse, d'autoriser un libre coulissement du moyen 6 d'isolation de l'élément télescopique distal 32 par rapport à l'autre élément télescopique 32', notamment sous l'effet du poids d'un tel élément télescopique (32 ; 32'), ceci en évitant tout serrage du moyen de réception 341 sur ce moyen d'isolation 6.

Ce mode de réalisation permet, alors, également, un serrage de ce moyen de réception 341 (que comporte cet autre élément télescopique 32') uniquement sur l'organe conducteur 340 de l'élément télescopique distal 32 mais aucunement sur son moyen d'isolation 6.

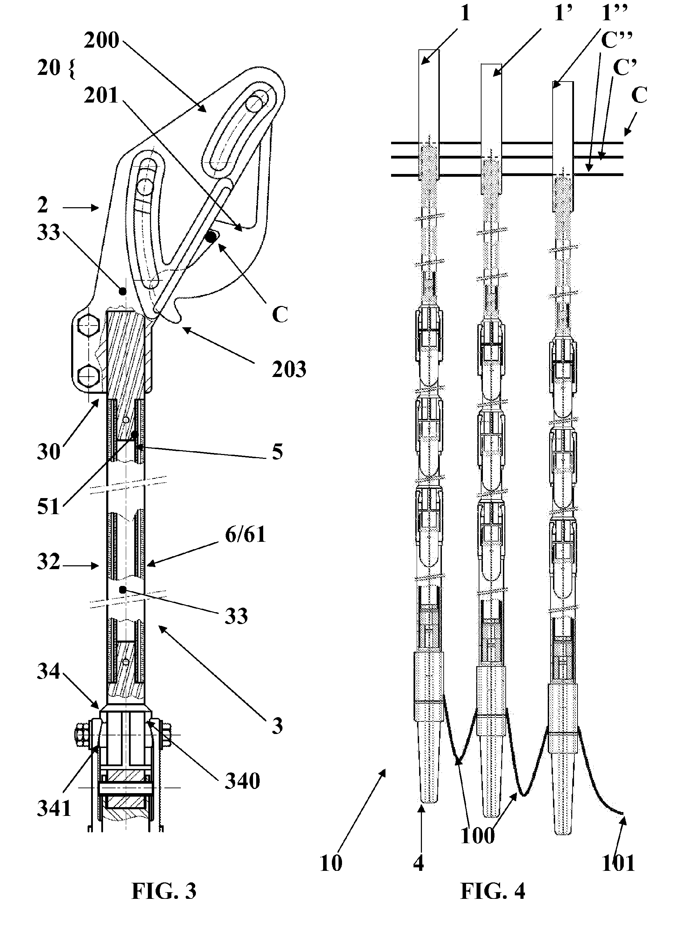

En ce qui concerne cet organe conducteur 340, celui-ci peut être réalisé de matière avec un barreau conducteur ou un tube conducteur 51. Cependant et selon un mode de réalisation préféré de l'invention illustré figures 2 et 3, un tel organe conducteur 340 est constitué par un embout engagé à l'intérieur d'un tube conducteur 51 que comporte la portion du moyen 5 de conduction de cet élément télescopique distal 32.

Quel que soit le mode de réalisation décrit ci-dessus du dispositif 1 de mise à la terre, celui-ci 1 est plus particulièrement approprié pour assurer un contact électrique (accrochage et/ou pincement) avec un câble (C ; C') situé à l'aplomb d'un autre câble (C' ; C''), ces deux câbles électriques (C, C' ; C', C'') faisant partie d'un réseau électrique de basse ou de moyenne tension et s'étendant dans un même plan sensiblement vertical.

Tel que mentionné ci-dessus, le dispositif 1 de mise à la terre comporte un moyen 2 pour réaliser un contact électrique avec le câble C à mettre à la terre.

Un tel moyen 2 pour réaliser un contact électrique adopte la forme d'une pince ou d'un crochet 20 et comporte un berceau 21 pour la réception du câble (C ; C' ; C'') à mettre à la terre.

A ce propos et selon l'invention, ce berceau 21 est déporté latéralement par rapport à un axe 33 le long duquel s'étend la perche 3 du dispositif 1 de mise à la terre. Un tel déport permet au dispositif 1 de mise à la terre d'être aisément associé à un câble C à mettre à la terre, ceci sans conférer à un tel dispositif 1 une inclinaison excessive par rapport à la verticale (plus particulièrement par rapport à l'aplomb) de ce câble C en raison de la présence, sous ce câble C, d'un autre câble C' se situant sensiblement dans un même plan vertical que le câble C à mettre à la terre.

Tel que mentionné ci-dessus, un tel moyen 2 pour réaliser un contact électrique adopte la forme d'un crochet 20 qui présente, alors, un tel berceau 21 comme visible figures 1 à 3.

Une caractéristique additionnelle de l'invention consiste en ce qu'un tel crochet 20 comporte, d'une part, une partie fixe 200 rendue solidaire de la perche 3, plus particulièrement au niveau de l'extrémité distale 30 de celle-ci 3, et s'étendant latéralement par rapport à l'axe 33 d'extension de cette perche 3, ceci à partir de celle-ci 3.

D'autre part, ce crochet 20 comporte une partie mobile 201 au niveau de laquelle 201 est défini le berceau 21 (déporté par rapport à l'axe 33) pour la réception du câble C à mettre à la terre.

Ce crochet 20 comporte, d'autre part encore, un moyen 202 pour le montage en déplacement, plus particulièrement en pivotement et/ou en coulissement, de la partie mobile 201 du crochet 20 par rapport à la partie fixe 200 de celui-ci 20.

Un tel moyen 202 de montage en déplacement est conçu en sorte que la partie mobile 201 se déplace entre :
- d'une part, une position d'ouverture (figures 1 et 2) dans laquelle le crochet 20 est ouvert en vue de permettre, soit l'engagement du câble C à mettre à la terre à l'intérieur de ce crochet 20 et sa coopération avec le berceau 21, soit le dégagement d'un tel câble C hors du crochet 20 ;
- d'autre part, une position de fermeture (figure 3) dans laquelle le crochet 20 est refermé autour du câble C à mettre à la terre, à l'instar d'une pince, et en vue d'assurer un maintien de ce crochet 20 sur ce câble C.

En fait, un tel crochet 20 (plus particulièrement le moyen 202 de montage en déplacement que comporte ce crochet 20) est conçu en sorte que, après coopération du câble C à mettre à la terre avec le berceau 21 que comporte la partie mobile 201 de ce crochet 20 et sous l'effet de la gravité et/ou d'un mouvement descendant du dispositif 1 de mise à la terre, la partie mobile 201 du crochet 20 se déplace par rapport à la partie fixe 200 de ce crochet 20, ceci en sorte que l'extrémité libre 203 de cette partie mobile 201 se rapproche de cette partie fixe 200, ayant pour effet que ce crochet 20 se referme sur ce câble C.

Tel que visible sur les figures en annexe, un tel moyen 202 de montage en déplacement comporte, d'une part, deux lumières de guidage définies au niveau de la partie fixe 200 du crochet 20 et, d'autre part, deux tétons, équipant la partie mobile 201 de ce crochet 20, et coulissant, chacun, librement à l'intérieur d'une telle lumière de guidage.

A ce propos, on observera que ces deux lumières divergent l'une par rapport à l'autre et présentent, plus particulièrement, une forme arquée.

Un tel mode de réalisation permet, alors, avantageusement, un montage en pivotement et en coulissement de la partie mobile 201 du crochet 20 par rapport à la partie fixe 200 de celui-ci 20.

Avantageusement, la partie mobile 201 de ce crochet 20 referme, alors de manière automatique, ce crochet 20 sur le câble C sous l'effet de la gravité auquel est soumis le dispositif de mise à la terre 1 et/ou d'un mouvement descendant de ce dispositif de mise à la terre 1 (un tel mouvement descendant étant naturel dans le cadre de l'accrochage d'un tel dispositif 1 à un câble C à mettre à la terre). A l'inverse, la partie mobile 201 de ce crochet 20 ouvre, là encore de manière automatique, ce crochet 20 sous l'effet d'un mouvement ascendant du dispositif 1 (un tel mouvement étant naturel lors décrochage d'un tel dispositif 1) et sous l'effet de la gravité auquel est soumis la partie mobile 201 de ce crochet 20.

Tel qu'évoqué ci-dessus, le dispositif 1 conforme à la présente invention est conçu pour mettre à la terre un câble électrique C, mais également, et dans le cas d'un réseau électrique comportant une pluralité de ces câbles électriques (C, C*'*, C*''*), pour mettre en court-circuit une partie au moins de ces câbles C.

A ce propos, on observera que l'invention concerne, alors également, une installation 10 de mise à la terre et en court-circuit d'une pluralité de câbles électriques (C, C', C*''*) que comporte un réseau électrique de basse ou de moyenne tension. Selon l'invention, une telle installation 10 comporte au moins une pluralité de dispositifs (1, 1*'*, 1*''*) de mise à la terre présentant les caractéristiques susmentionnées, ces dispositifs (1 ; 1*'* ; 1*''*) étant, raccordés, chacun, à un tel câble électrique (C ; C*'* ; C*''*) à mettre à la terre.

Selon une caractéristique additionnelle, une telle installation 10 comporte, également, au moins un moyen 100 pour le raccordement électrique, entre eux, de l'ensemble des dispositifs (1, 1*'*, 1'') de mise à la terre que comporte cette l'installation 10.

Finalement, cette installation 10 comporte au moins un moyen 101 pour le raccordement à la terre de l'ensemble des dispositifs (1, 1*'*, 1'') de mise à la terre de l'installation 10.

A ce propos, on observera qu'un tel moyen 100 de raccordement électrique des dispositifs (1, 1*'*, 1*''*) entre eux et/ou qu'un tel moyen 101 de raccordement à la terre sont, de préférence, constitués par un câble électrique.

Selon un mode de réalisation illustré figure 4, cette installation 10 comporte une pluralité de moyens 100 pour le raccordement, deux à deux, des dispositifs (1, 1' ; 1', 1") de mise à la terre. Dans un pareil cas, l'installation 10 peut comporter un unique moyen 101, associé à l'un de ces dispositifs (1, 1*'*, 1*''*) et raccordé à la terre.

Cependant et selon un mode de réalisation préféré non représenté, l'installation 10 comporte une pluralité de câbles raccordant, chacun, un dispositif (1, 1*'*, 1*''*) à la terre et, par conséquent également, l'ensemble des dispositifs (1, 1', 1") entre eux.

Tel qu'évoqué ci-dessus, le dispositif 1 décrit ci-dessus et présentant les caractéristiques susmentionnées est, de préférence, utilisé pour assurer la mise à la terre d'un câble électrique aérien C que comporte un réseau électrique de basse ou de moyenne tension, plus particulièrement un réseau comportant une pluralité de câbles électriques (C ; C*'*; C*''*) dont au moins deux (C, C*'* ; C, C*''*) s'étendent dans un même plan sensiblement vertical.

Finalement et en ce qui concerne l'installation 10 de mise à la terre et en court-circuit décrite ci-dessus et présentant les caractéristiques susmentionnées, celle-ci 10 est, de préférence, utilisée pour assurer la mise à la terre et en court-circuit d'au moins deux câbles électriques (C, C', C''), d'une part, que comporte un réseau électrique de basse ou de moyenne tension et, d'autre part, qui s'étendent dans un même plan sensiblement vertical, plus particulièrement des câbles électriques présentant un agencement en drapeau, en triangle ou analogue.

## Revendications

1. Dispositif (1) de mise à la terre d'un câble électrique aérien (C) que comporte un réseau électrique de basse ou de moyenne tension comportant au moins deux câbles (C ; C*'* ; C*''*) qui s'étendent dans un même plan sensiblement vertical, ce dispositif (1) comportant :
- une perche (3) présentant une extrémité distale (30) ainsi qu'une extrémité proximale (31) ;
- un moyen (2) pour réaliser un contact électrique avec le câble (C) à mettre à la terre, ce moyen (2) équipant l'extrémité distale (30) de la perche (3) ;
- un moyen (4) pour la préhension du dispositif (1), ce moyen (4) de préhension équipant l'extrémité proximale (31) de la perche (3) ;
- un moyen (5) pour réaliser une conduction électrique entre le moyen de contact (2) et le moyen de préhension (4), **caractérisé par le fait que** le dispositif (1) comporte, s'étendant à partir de l'extrémité distale (30) de la perche (3) et sur une partie au moins de la longueur de cette perche (3), au moins un moyen (6) pour isoler électriquement et extérieurement cette perche (3), plus particulièrement une partie au moins du moyen (5) de conduction électrique que comporte cette perche (3).

2. Dispositif (1) selon la revendication 1, **caractérisé par le fait que** le moyen (2) pour réaliser un contact électrique comporte un berceau (21) pour la réception du câble (C) à mettre à la terre, ce berceau (21) étant déporté latéralement par rapport à un axe (33) le long duquel s'étend la perche (3) du dispositif (1) de mise à la terre.

3. Dispositif (1) selon la revendication 2, **caractérisé par le fait que** le moyen (2) pour réaliser un contact électrique est constitué par un crochet (20) pour l'accrochage du dispositif (1) sur le câble (C) à mettre à la terre, ce crochet (20) comportant :
- une partie fixe (200), rendue solidaire de la perche (3), et s'étendant latéralement par rapport à l'axe (33) d'extension de cette perche (3) ;
- une partie mobile (201) au niveau de laquelle (201) est défini le berceau (21) pour la réception du câble (C) à mettre à la terre ;
- un moyen (202) pour le montage en déplacement, plus particulièrement en pivotement et/ou en coulissement, de la partie mobile (201) du crochet (20) par rapport à la partie fixe (200) de celui-ci (20).

4. Dispositif (1) selon la revendication 3, **caractérisé par le fait que** le moyen (202) de montage en déplacement est conçu en sorte que, après coopération du câble (C) à mettre à la terre avec le berceau (21) de la partie mobile (201) et sous l'effet de la gravité auquel est soumis le dispositif de mise à la terre (1) et/ou d'un mouvement descendant de ce dispositif de mise à la terre (1), la partie mobile (201) se déplace par rapport à la partie fixe (200), ceci en sorte que l'extrémité libre (203) de cette partie mobile (201) se rapproche de cette partie fixe (200), ayant pour effet que le crochet (20) se referme sur ce câble (C) à mettre à la terre.

5. Dispositif (1) selon l'une quelconque des revendications précédentes, **caractérisé par le fait que** la perche (3) comporte au moins deux éléments télescopiques (32, 32*'*, 32*''*) et que l'extrémité distale (30) de cette perche (3) est définie au niveau de l'un des éléments télescopiques (32), plus particulièrement au niveau d'un élément télescopique distal (32), tandis que l'extrémité proximale (31) de cette perche (3) est définie au niveau d'un autre élément télescopique (32''), plus particulièrement au niveau d'un élément télescopique proximal (32'').

6. Dispositif (1) selon la revendication 5, **caractérisé par le fait que**, d'une part, chaque élément télescopique (32, 32*'*, 32*''*) comporte une portion du moyen (5) pour réaliser une conduction électrique et, d'autre part, la perche (3) comporte des moyens (34) pour réaliser une connexion électrique entre la portion du moyen (5) de conduction que comporte un élément télescopique (32 ; 32') et la portion du moyen (5) de conduction que comporte un autre élément télescopique (32' ; 32''), ceci au moins dans une configuration entièrement déployée de la perche (3).

7. Dispositif (1) selon la revendication 6, **caractérisé par le fait qu'**au moins un élément télescopique distal (32) au niveau duquel est définie l'extrémité distale (30) de la perche (3), comporte un moyen (6) pour isoler électriquement et extérieurement une portion du moyen (5) pour réaliser une conduction électrique que comporte cet élément télescopique distal (32).

8. Dispositif (1) selon la revendication 7, **caractérisé par le fait que** le moyen (6) pour isoler la portion du moyen (5) pour réaliser une conduction électrique que comporte cet élément télescopique distal (32), est constitué, soit par un revêtement isolant, notamment sous forme d'un manchon isolant, habillant cette portion de moyen de conduction (5), soit par un tube (61) creux réalisé en un matériau isolant et recevant, intérieurement, cette portion de moyen de conduction (5).

9. Dispositif (1) selon la revendication 8, **caractérisé par le fait que** la portion du moyen (5) de conduction électrique est, au moins en partie, constituée par un barreau conducteur ou par un tube conducteur (51), notamment métallique, s'étendant longitudinalement à l'intérieur du moyen (6) pour isoler électriquement cette portion de moyen de conduction (5), ce moyen d'isolation (6) étant constitué par un manchon isolant ou par un tube creux isolant (61).

10. Dispositif (1) selon la revendication 9, **caractérisé par le fait que** le tube creux isolant (61) et, selon le cas, le barreau conducteur ou le tube conducteur (51) sont coaxiaux et espacés l'un de l'autre radialement, plus particulièrement par un matériau isolant, notamment une lame d'air.

11. Dispositif (1) selon la revendication 7, **caractérisé par le fait que** le moyen (34) pour réaliser une connexion électrique entre la portion du moyen (5) de conduction de l'élément télescopique distal (32) et la portion du moyen (5) de conduction d'un autre élément télescopique (32') à l'intérieur duquel s'escamote l'élément télescopique distal (32) comporte, d'une part, un organe conducteur (340) que comporte la portion du moyen (5) de conduction de l'élément télescopique distal (32) au niveau d'une extrémité de cet élément télescopique distal (32) opposée à celle recevant le moyen (2) de contact avec le câble (C) à mettre à la terre et, d'autre part, un moyen (341) pour la réception de manière serrée de cet organe conducteur et que comporte la portion du moyen (5) de conduction de cet autre élément télescopique (32').

12. Dispositif (1) selon les revendications 9 et 11, **caractérisé par le fait que** l'organe conducteur (340) présente une section externe supérieure à celle du moyen d'isolation (6) que comporte l'élément télescopique distal (32), voire est constitué par un embout engagé à l'intérieur d'un tube conducteur (51) que comporte la portion du moyen (5) de conduction de cet élément télescopique distal (32).

13. Installation (10) de mise à la terre et en court-circuit d'une pluralité de câbles électriques (C ; C*'*; C*''* que comporte un réseau électrique de basse ou de moyenne tension comportant une pluralité de câbles électriques (C ; C*'*; C*''*) dont au moins deux (C, C*'* ; C, C*''*) s'étendent dans un même plan sensiblement vertical, **caractérisée par le fait qu'**elle comporte :
- au moins une pluralité de dispositifs (1 ; 1' ; 1''), d'une part, conformes à l'une quelconque des revendications 1 à 12 et, d'autre part, raccordés, chacun, à un tel câble électrique (C ; C*'*; C*''*) ;
- au moins un moyen (100) pour le raccordement électrique, entre eux, de l'ensemble des dispositifs (1 ; 1*'* ; 1*''*) de mise à la terre de l'installation ;
- au moins un moyen (101) pour le raccordement à la terre de l'ensemble des dispositifs (1 ; 1*'* ; 1*''*) de mise à la terre de l'installation (10).

14. Utilisation du dispositif (1) de mise à la terre selon l'une quelconque des revendications 1 à 12 pour la mise à la terre d'un câble électrique aérien (C) que comporte un réseau électrique de basse ou de moyenne tension comportant une pluralité de câbles électriques (C ; C*'*; C*''*) dont au moins deux (C, C*'* ; C, C*''*) s'étendent dans un même plan sensiblement vertical.

15. Utilisation de l'installation (1) de mise à la terre et en court-circuit selon le revendication 13 pour la mise à la terre et en court-circuit d'au moins deux câbles électriques (C ; C*'*; C*''*), d'une part, que comporte un réseau électrique de basse ou de moyenne tension et, d'autre part, qui s'étendent (C, C' ; C*'*; C*''*) dans un même plan sensiblement vertical.
